(19) **Europäisches Patentamt / European Patent Office / Office européen des brevets**

(11) **EP 4 530 257 A1**

(12) **EUROPEAN PATENT APPLICATION**

(43) Date of publication:
**02.04.2025 Bulletin 2025/14**

(21) Application number: **24202274.7**

(22) Date of filing: **24.09.2024**

(51) International Patent Classification (IPC):
$C01G\ 53/50^{(2025.01)}$ $C01G\ 53/56^{(2025.01)}$

(52) Cooperative Patent Classification (CPC):
**C01G 53/56; C01G 53/50;** C01P 2002/76;
C01P 2002/78; C01P 2004/03; C01P 2004/61;
C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 KR 20230130990**

(71) Applicant: SAMSUNG SDI CO., LTD.
**Giheung-gu
Yongin-si, Gyeonggi-do
17084 (KR)**

(72) Inventors:
• **SEONG, Wonmo**
  **Yongin-si, Gyeonggi-do 17084 (KR)**
• **HASE, Naoyuki**
  **Yongin-si, Gyeonggi-do 17084 (KR)**
• **KIM, Dohoon**
  **Yongin-si, Gyeonggi-do 17084 (KR)**
• **YEON, Dong Hee**
  **Yongin-si, Gyeonggi-do 17084 (KR)**

(74) Representative: **Marks & Clerk LLP**
**15 Fetter Lane
London EC4A 1BW (GB)**

(54) **POSITIVE ELECTRODE ACTIVE MATERIAL, POSITIVE ELECTRODE, AND RECHARGEABLE LITHIUM BATTERIES**

(57) Provided are a positive electrode active material for a rechargeable lithium battery including a compound represented by Chemical Formula 1, a positive electrode including the same, and a rechargeable lithium battery. In Chemical Formula 1, $0<a<1$, $0.03\leq x\leq0.2$, $0.35\leq y\leq0.7$, $0<b<1$, $0<c<1$ and $0.5\leq z\leq1.0$:

Chemical Formula 1 $\quad a[Li_{1+x}(Ni_yMn_{1-y})_{1-x}O_2] + (1-a)[b(LiNi_zMn_{1-z}O_2)+c(Li_2MnO_3)]$.

EP 4 530 257 A1

FIG. 6

S4800 5.0kV 8.0mm x40.0k SE(M)                    1.00um

**Description**

**BACKGROUND**

**1. Field**

Positive electrode active materials, positive electrodes including the same, and rechargeable lithium batteries are disclosed herein.

**2. Description of the Related Art**

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery having high energy density as a driving power source and/or a power storage power source for hybrid or electric vehicles.

Various positive electrode active materials have been investigated to realize rechargeable lithium batteries for applications to various suitable uses. Among them, lithium nickel-based oxide, lithium nickel manganese cobalt composite oxide, lithium nickel cobalt aluminum composite oxide, and lithium cobalt oxide are mainly used as positive electrode active materials. However, although the recent demand for large-sized, high-capacity, and/or high-energy-density rechargeable lithium batteries has rapidly increased, the supply for transition metals such as nickel, cobalt, and the like may not only be severely insufficient, but also their prices are sharply increasing. Accordingly, there is a need for development of a low-cost high-energy positive electrode active material.

A lithium-manganese-rich (LMR) material, which is a layered positive electrode active material including lithium in an excessive amount and manganese in a relatively large amount and having a layered structure and thus expresses high capacity by applying a new principle referred to as oxygen oxidation-reduction (O-redox) as well as an existing transition metal oxidation-reduction and concurrently (e.g., simultaneously), includes low-cost manganese at a high ratio, is attracting attention as an ultra-low-cost-generation positive electrode active material.

However, because the LMR material has low reversibility of O-redox itself, which is a main source capable of producing the high capacity and may release oxygen gas during charging and discharging and thus deteriorate its crystal structure, there may be a voltage decay phenomenon in that a voltage drops during charging and discharging. In addition, as O-redox capacity is higher out of the total capacity, an average discharge voltage of a positive electrode may be lower. Accordingly, although the O-redox is a main source of producing high capacity, when its proportion is excessively high, there is a problem of deteriorating cycle-life characteristics or energy density calculated as (capacity x voltage).

**SUMMARY**

Provided is a highly cost-competitive lithium-manganese-rich positive electrode active material that secures high capacity characteristics due to O-redox while minimizing or reducing the side effects caused by O-redox, thereby minimizing or reducing voltage drop and energy density decrease and improving cycle-life characteristics.

Some embodiments provide a positive electrode active material for a rechargeable lithium battery including a compound represented by Chemical Formula 1.

$$\text{Chemical Formula 1} \qquad a[\text{Li}_{1+x}(\text{Ni}_y\text{Mn}_{1-y})_{1-x}\text{O}_2] + (1-a)[b(\text{LiNi}_z\text{Mn}_{1-z}\text{O}_2)+c(\text{Li}_2\text{MnO}_3)]$$

In Chemical Formula 1, $0<a<1$, $0.03\leq x\leq0.2$, $0.35\leq y\leq0.7$, $0<b<1$, $0<c<1$, and $0.5\leq z\leq1$.

Some embodiments provide a positive electrode for a rechargeable lithium battery including the positive electrode active material.

Some embodiments provide a rechargeable lithium battery including the positive electrode, the negative electrode, a separator between the positive electrode and the negative electrode, and an electrolyte.

Some embodiments provide an all-solid-state rechargeable battery including the positive electrode, the negative electrode, and a solid electrolyte layer between the positive electrode and the negative electrode.

At least some of the above and other features of the invention are set out in the claims.

The positive electrode active material according to some embodiments is a lithium-manganese-rich positive electrode active material that is highly price competitive, can achieve high capacity by utilizing O-redox and at the same time, effectively improve problems of voltage drop and energy density by controlling a ratio of O-redox capacity to total capacity to exhibit high discharge capacity and average discharge voltage, and can realize excellent high-temperature cycle-life characteristics and high energy density.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a perspective view schematically showing a rechargeable lithium battery according to some embodiments.
FIG. 2 is a cross-sectional view schematically showing a rechargeable lithium battery according to some embodiments.
FIGS. 3 and 4 are perspective views schematically showing rechargeable lithium batteries according to some embodiments.
FIG. 5 is a graph showing a peak in a (003) plane and a peak in a (020) plane as a result of X-ray diffraction analysis (XRD) for positive electrode active materials of Example 2 (950 °C), Example 5 (700 °C), and Comparative Example 5 (500 °C).
FIG. 6 is a scanning electron microscope (SEM) image of a particle surface of a positive electrode active material prepared in Example 2.
FIG. 7 is an SEM image of a particle surface of a positive electrode active material prepared in Example 5.
FIG. 8 is an SEM image of a particle surface of a positive electrode active material prepared in Comparative Example 5.

## DETAILED DESCRIPTION

Hereinafter, example embodiments will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In the present disclosure, "layer" herein includes not only a shape formed on the whole surface when viewed from a plan view, but also a shape formed on a partial surface.

In the present disclosure, the average particle diameter may be measured by any suitable method generally used in the art and, for example, may be measured by a particle size analyzer, and/or may be measured by a transmission electron microscopic image and/or a scanning electron microscopic image. In some embodiments, it is possible to obtain an average particle diameter value by using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or length of the major axis) of about 20 particles at random in a scanning electron microscopic image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

## Positive Electrode Active Material

Some embodiments provide a positive electrode active material for a rechargeable lithium battery including a compound represented by Chemical Formula 1.

$$\text{Chemical Formula 1} \qquad a[Li_{1+x}(Ni_yMn_{1-y})_{1-x}O_2] + (1-a)[b(LiNi_zMn_{1-z}O_2) + c(Li_2MnO_3)]$$

In Chemical Formula 1, $0 < a < 1$, $0.03 \leq x \leq 0.2$, $0.35 \leq y \leq 0.7$, $0 < b < 1$, $0 < c < 1$, and $0.5 \leq z \leq 1.0$.

In Chemical Formula 1, $[Li_{1+x}(Ni_yMn_{1-y})_{1-x}O_2]$ indicates a solid-solution phase and $[b(LiNi_zMn_{1-z}O_2) + c(Li_2MnO_3)]$ indicates a composite phase. In some embodiments, the compound represented by Chemical Formula 1 includes both a solid-solution phase and a composite phase. Existing lithium-manganese-rich materials may generally have either a solid-solution phase or a composite phase structure. In embodiments of the present disclosure, the positive electrode active material according to some embodiments may be a material in which not only a composite phase but also a solid-solution phase is added, for example, a material in which a composite phase and a solid-solution phase are mixed together, or a material in which a composite phase and a solid-solution phase coexist competitively (e.g., heterogeneously).

Herein, according to some embodiments of the present disclosure, the solid-solution phase is a solid mixture in which different elements are completely and uniformly mixed together. The solid-solution phase may mean that other elements are mixed into the solid crystal and distributed uniformly, exhibiting the appearance of a solution in which a solute is uniformly distributed in a solvent. The solid-solution phase may be the formation of a continuum quasi-isostructural compound having new properties due to the strong interrelationship of two or more individual components. The solid-solution is homogeneous, has almost the same composition, and may have a single phase or a single crystal structure. In contrast, a composite phase is made up of two or more materials combined, and may be made up of materials having different physical properties, and the materials remain physically distinct. The composite phase may be heterogeneous and include two or more compositions and two or more phases or crystal structures.

The presence of solid-solution phases and composite phases can be confirmed through Energy above Hull analysis, which will be further described below, and/or X-ray diffraction (XRD) diffraction peaks.

In Chemical Formula 1, a is a ratio (or coefficient) of the solid-solution phase and $(1-a)$ is a ratio (or coefficient) of the composite phase. In Chemical Formula 1, the range of a is $0 < a < 1$, for example, $0.1 \leq a < 0.9$, $0.2 \leq a \leq 0.8$, or $0.3 \leq a \leq 0.7$ (e.g. $0.1 \leq a \leq 0.6$, $0.15 \leq a \leq 0.5$, $0.2 \leq a \leq 0.45$, $0.3 \leq a \leq 0.45$, $0.35 \leq a \leq 0.45$, $0.4 \leq a \leq 0.45$, or $0.42 \leq a \leq 0.45$), but the range is not particularly limited.

In Chemical Formula 1, y is a nickel content of the solid-solution phase and z represents a nickel content of a layered material in the composite phase. The range of y may be $0.35 \leq y \leq 0.7$, for example, $0.35 \leq y \leq 0.66$, $0.4 \leq y \leq 0.60$, $0.45 \leq y \leq 0.55$, or $0.5 \leq y \leq 0.66$ (e.g. $0.5 \leq y \leq 0.6$ or $0.5 \leq y \leq 0.55$). The range of z may be $0.5 \leq z \leq 1.0$, for example, $0.5 \leq z \leq 0.99$, $0.5 \leq z \leq 0.95$, $0.50 \leq z \leq 0.85$, or $0.6 \leq z \leq 0.75$ (e.g. $0.55 \leq z \leq 0.75$, $0.55 \leq z \leq 0.7$, $0.55 \leq z \leq 0.65$ or $0.55 \leq z \leq 0.6$).

The positive electrode active material according to some embodiments may be a lithium-manganese-rich material having a nickel content of about 50 mol% to about 70 mol%, or for example, about 50 mol% to about 66 mol%, based on 100 mol% of all metals excluding lithium. The positive electrode active material of such a composition may secure price competitiveness by excluding or containing only a very small amount of expensive cobalt and also containing low-cost manganese, may realize high capacity by securing capacity according to the nickel content and at the same time, may secure capacity expressed by O-redox, and effectively improve problems of voltage drop and low energy density by limiting an O-redox proportion.

In Chemical Formula 1, x is related to a lithium content, and $(1+x)$ corresponds to a molar ratio of lithium. The range of x is $0.03 \leq x \leq 0.2$, for example, $0.03 \leq x \leq 0.15$, $0.03 \leq x \leq 0.13$, $0.03 \leq x \leq 0.11$, or $0.03 \leq x \leq 0.09$ (e.g. $0.03 \leq x \leq 0.07$). For example, a ratio of the lithium content $(1+x)$ to the total content of metals $(1-x)$ excluding lithium, for example, $(1+x)/(1-x)$ may be about 1.06 to about 1.5, about 1.06 to about 1.3, or about 1.1 to about 1.2 (e.g. about 1.1 to about 1.15).

In Chemical Formula 1, b and c may be related to a ratio of $(LiNi_zMn_{1-z}O_2)$ and $(Li_2MnO_3)$ in the composite phase, respectively, and may be $0 < b < 1$, $0 < c < 1$, for example, $0.1 \leq b \leq 0.9$, $0.2 \leq b \leq 0.8$, or $0.3 \leq b \leq 0.7$ (e.g. $0.5 \leq b \leq 0.9$, $0.6 \leq b \leq 0.85$, $0.7 \leq b \leq 0.85$, $0.75 \leq b \leq 0.85$, or $0.8 \leq b \leq 0.85$), and $0.1 \leq c \leq 0.9$, $0.2 \leq c \leq 0.8$, or $0.3 \leq c \leq 0.7$ (e.g. $0.1 \leq c \leq 0.5$, $0.1 \leq c \leq 0.4$, $0.1 \leq c \leq 0.3$, $0.1 \leq c \leq 0.2$, or $0.1 \leq c \leq 0.15$), but the range is not particularly limited.

The positive electrode active material according to some embodiments may have an "Energy above Hull" of less than about 25 meV/atom. Energy above Hull refers to a difference between the formation energy of the composite phase, which is in the most stable state, and the formation energy of the solid-solution phase, which is metastable. The 25 meV/atom is the energy that an atom can overcome at room temperature (300 K), indicating the thermodynamic stability of the material at room temperature. The greater the Energy above Hull, the lower the possibility of existing as a solid-solution phase and the higher the possibility or ratio of existing as a stable composite phase. The positive electrode active material according to some embodiments may satisfy an Energy above Hull of less than about 25 meV/atom, and therefore, a composite phase and a solid-solution phase may exist concurrently (e.g., simultaneously) at room temperature.

In this way, the positive electrode active material according to some embodiments including a solid-solution phase may include oxygen in the structure in a relatively more stable manner compared to the existing composite phase lithium-manganese-rich material. In existing composite materials ($a = 0$), oxygen vacancy occurs due to stress at the interface due to different lattice constants and lithium concentrations of the $LiNi_zMn_{1-z}O_2$ phase and $Li_2MnO_3$ phase during the charge and discharge process. While the present disclosure is not limited by any particular mechanism or theory, it is believed that this is because in the positive electrode active material according to some embodiments, the amount of the interface is reduced, thereby lowering the probability of problems occurring at the interface. Accordingly, there is less structural change due to oxygen vacancy during the charging and discharging process, and the problem of voltage drop due to oxygen generation and structural deterioration can be effectively improved. Ultimately, in some embodiments, it is possible to provide a positive electrode active material having improved cycle-life characteristics and energy density by solving the problem of voltage drop due to charging and discharging while using a lithium-manganese-rich material having high capacity and high price competitiveness.

In the positive electrode active material according to some embodiments, the capacity by O-redox is expressed by $Li_{1+x}(Ni_yMn_{1-y})_{1-x}O_2$ in the solid-solution phase and/or $Li_2MnO_3$ in the composite phase. Either or both $Li_{1+x}(Ni_yMn_{1-y})_{1-x}O_2$ and $Li_2MnO_3$ may contribute to O-redox.

The positive electrode active material according to some embodiments may have a composition that uses O-redox but minimizes or reduces side effects caused by O-redox. For example, a ratio of a capacity expressed by O-redox to 100% of the total capacity of the positive electrode active material may be less than about 15%, for example about 1% to about 9.9%, or about 3% to about 9.5%. As an example, when an O-redox proportion is controlled to less than about 15% in a lithium-manganese-rich material having a Ni content of about 50 to about 70 mol%, the problem of voltage drop due to charging and discharging may be effectively improved, and thus cycle-life characteristics and energy density may be improved.

As an example, a method of measuring a ratio of a capacity expressed by O-redox to a total capacity of the positive electrode active material is as follows. A half-cell is manufactured by using a positive electrode using the corresponding positive electrode active material and a lithium counter electrode and applying a carbonate-based electrolyte, and charging and discharging is performed under the following conditions. After the first set, the second set proceeds.

**First Set**

(1) first cycle: Charge to about 4.65 V at a constant current of 0.1 C at 25 °C, then maintain the voltage until the current value reaches 0.05 C, and then discharge to 2.5 V at a constant current of 0.1 C.
(2) second cycle: Charge to about 4.45 V at a constant current of 0.2 C at 25 °C, then maintain the voltage until the current value reaches 0.05 C, and then discharge to 2.5 V at a constant current of 0.2 C.

**Second set**

(1) first cycle: Charge to about 4.45 V at a constant current of 0.2 C at 25 °C, then maintain the voltage until the current value reaches 0.05 C, and then discharge to 2.5 V at a constant current of 0.2 C.
(2) second cycle: Charge to about 4.45 V at a constant current of 0.2 C at 25 °C, then maintain the voltage until the current value reaches 0.05 C, and then discharge to 2.5 V at a constant current of 0.2 C.

When the discharge capacity in the second cycle of the first set is X and the discharge capacity in the second cycle of the second set is Y, the X-Y value can be referred to as O-redox capacity. If O-redox is activated by charging to about 4.65 V in the first cycle, the capacity increases in the second cycle, and this increase can be seen as O-redox capacity. The ratio (%) of the capacity expressed by O-redox to the total capacity of the positive electrode active material may be calculated using Equation 1.

$$\text{Equation 1}$$

$$\{(X-Y)/X\} \times 100$$

Generally, in the first cycle of the positive electrode where O-redox is expressed, it is understood that the O-redox reaction occurs at a high voltage range of greater than or equal to about 4.45 V, but a voltage at which the level of expression is maximum can be affected by various factors such as the positive electrode surface condition or composition, and electrolyte composition. However, in this high voltage range, a side reaction of the electrolyte solution occurs in addition to the O-redox reaction, wherein the higher the voltage the more severe the side reaction becomes, and when the voltage is excessively increased, the side reaction occurs more than the O-redox reaction, thereby making it difficult to precisely measure the O-redox capacity. When the voltage is excessively reduced in order to reduce the side reaction of the electrolyte solution, the O-redox itself occurs less, also making it difficult to precisely measure the O-redox capacity. Accordingly, the present inventors have performed various experiments to set an upper voltage limit of the first cycle of the first set at about 4.65 V, at which the O-redox capacity is most effectively measured but which may be changed by various factors such as a state or composition of the positive electrode surface, a composition of the electrolyte solution, and/or the like, for example, within a range of greater than or equal to about 4.55 V and less than or equal to about 4.8 V, for example, about 4.55 V, about 4.6 V, about 4.7 V, about 4.75 V, about 4.8 V, and/or the like.

In general, the more the O-redox is expressed, the lower the average discharge voltage after O-redox activation, but in the positive electrode active material according to some embodiments, the average discharge voltage may be improved by controlling the O-redox proportion. For example, at the second cycle of the first set, the average discharge voltage (vs. Li/Li$^+$) may be greater than or equal to about 3.83 V, for example, greater than or equal to about 3.84 V. Herein, the average discharge voltage, when the positive electrode active material is applied to a positive electrode to manufacture a half-cell, which is charged and discharged with the aforementioned first set, may mean an average discharge voltage at the second cycle of the first set by applying. The average discharge voltage may be, for example, calculated by dividing an Integral of an area under a voltage curve (a voltage-capacity graph) by discharge capacity.

The positive electrode active material according to some embodiments may have a ratio ($I_{(020)}/I_{(003)}$) of about 2%, which is a ratio of peak intensity on a (020) plane on $Li_2MnO_3$ corresponding to a C2/m space group to peak intensity on a (003) plane of $LiNi_zMn_{1-z}O_2$ corresponding to a $R\bar{3}m$ space group in an X-ray diffraction analysis. Herein, the (003) plane refers to a lattice plane corresponding to a Miller index (003), and the (020) plane refers to a lattice plane corresponding to a Miller index (020). In XRD, a peak of the (003) plane appears around $2\theta$ = 18 ° to 19 °, and a peak of the (020) plane appears around $2\theta$=20.3 ° to 22 °. The peak of the (020) plane may be a peak due to $Li_2MnO_3$ in Chemical Formula 1. Because the positive electrode active material according to some embodiments exhibits the (020) peak of $Li_2MnO_3$ among composite phases, of which intensity is lowered, the ratio of peak intensity of the (020) plane to peak intensity of the (003) phase may be controlled to be less than or equal to about 2%. The ratio of $I_{(020)}/I_{(003)}$ may be, for example, less than or equal to about 1.9%, less than or equal to about 1.8%, or less than or equal to about 1.0%, about 0.5% to about 2%, about 0.8% to about 1.9%, about 0.3% to about 1.8%, or about 0.3% to about 1.0% (e.g. about 0.8% to about 1.5%, or about 0.9% to about 1.4%). When the ratio of $I_{(020)}/I_{(003)}$ satisfies the ranges herein, the O-redox proportion may be reduced, which may improve the voltage drop problem that otherwise occurs during charging and discharging.

The positive electrode active material according to some embodiments may have an "a" lattice constant of greater than or equal to about 2.865 Å, for example, greater than or equal to about 2.870 Å, or about 2.875 Å to about 2.885 Å (e.g. 2.880 Å to about 2.885 Å, or 2.882 Å to about 2.885 Å) in XRD. For example, the "a" lattice constant of the positive electrode active material may be greater than or equal to about 2.875 Å. In some embodiments, a ratio of the "c" lattice constant to the "a" lattice constant may be less than or equal to about 4.968, for example, less than or equal to about 4.965, less than or equal to about 4.960, or about 4.955 to about 4.965 (e.g. about 4.950 to about 4.968, about 4.953 to about 4.960, or about 4.953 to about 4.955). When the "a" lattice constant and the ratio of the "c" lattice constant to the "a" lattice constant of the positive electrode active material satisfy the ranges herein, the voltage drop problem of a rechargeable lithium battery including the same during the charge and discharge may be effectively improved, and cycle-life characteristics and energy density also may be improved.

The positive electrode active material of some embodiments may realize a higher reversible discharge capacity ratio than an existing lithium-manganese-rich material. Herein, the reversible discharge capacity ratio may be a ratio (X/A) of discharge capacity (X) at the 2$^{nd}$ cycle of the first set to charge capacity (A) at the first cycle in the method of measuring a ratio of capacity expressed by the O-redox. The reversible discharge capacity ratio may affect an N/P ratio, which is a loading level ratio between negative and positive electrodes in a full-cell design. For example, as the reversible discharge capacity ratio is lower, because a negative electrode having a higher loading level should be used in the cell to achieve the same positive electrode capacity, total energy density becomes lower. For example, the higher reversible discharge capacity ratio may have more advantage or benefit to increase energy density of rechargeable lithium batteries.

The positive electrode active material according to some embodiments may have a reversible discharge capacity ratio of greater than or equal to about 63% or greater than or equal to about 72%, but, the reversible discharge capacity ratio may be further improved by lowering a molar ratio of lithium to total metal excluding the lithium, wherein the reversible discharge capacity ratio may be greater than or equal to about 77% or greater than or equal to about 79%, which may further improve the energy density of the rechargeable lithium batteries.

The positive electrode active material according to some embodiments may realize higher pellet density than an existing lithium-manganese-rich material. The positive electrode active material may have a pellet density of greater than about 2.70 g/cc, for example, greater than or equal to about 2.71 g/cc, greater than or equal to about 2.74 g/cc, or about 2.71 g/cc to about 2.85 g/cc (e.g. about 2.70 g/cc to about 2.85 g/cc, about 2.74 g/cc to about 2.85 g/cc, about 2.75 g/cc to about 2.81 g/cc, or about 2.80 g/cc to about 2.81 g/cc). Herein, the pellet density may be measured after pressing the positive electrode active material at a pressure of about 3.3 tons into a pellet. In general, as a content of lithium and manganese is larger, because a proportion of $LiMnO_2$, $Li_2MnO_3$, and/or the like having low theoretical density becomes higher in the positive electrode active material, pellet density of the positive electrode active material becomes lower. In some embodiments, the positive electrode active material may realize relatively high pellet density due to a somewhat lower content of lithium and/or manganese than an existing lithium-manganese-rich material and a low proportion of phases having lower theoretical density and thereby, is expected to realize high electrode density.

The positive electrode active material according to some embodiments may have a residual lithium content of less than or equal to about 0.4 wt% on the surface, for example, less than or equal to about 0.3 wt%, less than or equal to about 0.2 wt%, less than or equal to about 0.1 wt%, or about 0.001 wt% to about 0.1 wt% on the surface. This may be said to be a feature distinguished from high nickel-based materials having a nickel content of greater than about 70 mol%.

The positive electrode active material may be in the form of secondary particles made by agglomerating a plurality of primary particles. An average particle diameter ($D_{50}$) of the positive electrode active material may be about 1 $\mu$m to about 20 $\mu$m, for example about 5 $\mu$m to about 15 $\mu$m, or about 8 $\mu$m to about 12 $\mu$m. For example, the positive electrode active material may be a mixture of small particles having an average particle diameter ($D_{50}$) of about 0.5 $\mu$m to about 8 $\mu$m and large particles having an average particle diameter ($D_{50}$) of about 9 $\mu$m to about 20 $\mu$m. Herein, the average particle diameter may be obtained by measuring sizes of any 20 particles (e.g., a length of a particle diameter, a long diameter, or a major axis) from an SEM image of the positive electrode active material to obtain a particle size distribution, from which a particle size at 50 volume% of a cumulative volume is taken as the average particle diameter ($D_{50}$).

**Method of Preparing Positive Electrode Active Material**

Some embodiments provide a method of preparing a positive electrode active material that includes (e.g. consists of) mixing together a precursor represented by Chemical Formula 2 and a lithium raw material and performing a heat treatment. Herein, a molar ratio of lithium of the lithium raw material to a total metal of the precursor is designed to be about 1.06 to about 1.5.

$$\text{Chemical Formula 2} \qquad Ni_{y2}Mn_{1-y2}(OH)_2$$

In Chemical Formula 2, $0.5 \leq y2 \leq 0.7$.

In Chemical Formula 2, $0.5 \leq y2 \leq 0.66$, $0.5 \leq y2 \leq 0.60$, or $0.5 \leq y2 \leq 0.55$. In some embodiments, a molar content of nickel to a total metal in the precursor may satisfy about 50 mol% to about 70 mol%, for example, about 50 mol% to about 66 mol%, about 50 mol% to about 60 mol%, or about 50 mol% to about 55 mol%.

When the positive electrode active material precursor is designed to have the nickel content as above, a positive electrode active material of Chemical Formula 1 may be synthesized in which a desired solid-solution phase and a composite phase concurrently (e.g., simultaneously) exist. When the molar content of nickel to a total metal in the precursor is less than about 50 mol% or greater than about 70 mol%, which may result in Energy above Hull of greater than about 25 meV/atom, the solid-solution phase and the composite phase may not coexist at room temperature, for example, the composite phase alone may exist. In addition, $LiNi_zMn_{1-z}O_2$ corresponding to a $R\overline{3}m$ space group may not be formed or formed at a low rate, but $Li_2MnO_3$ corresponding to a C2/m space group may be formed at an increased rate, and accordingly, the ratio of peak intensity (020) plane peak intensity ($I_a$) to (003) plane peak intensity ($I_b$), that is, $I_a/I_b$ may be greater than about 2%. Herein, the O-redox capacity ratio is increased, and the voltage drop is increased during charging and discharging, thereby deteriorating cycle-life characteristics.

A molar ratio (Li/(Ni+Mn)) of lithium of the lithium raw material to a total metal of the precursor may be about 1.06 to about 1.5 for example, about 1.06 to about 1.4, about 1.1 to about 1.3, or about 1.1 to about 1.2 (e.g. about 1.1 to about 1.15). When the molar ratio of lithium satisfies the above ranges, it is possible to synthesize a positive electrode active material according to Chemical Formula 1 in which a solid-solution phase and a composite phase exist concurrently (e.g., simultaneously).

The heat treatment may be performed (e.g. at a heat treatment temperature) in a temperature range of, for example, about 700 °C to about 1100 °C, for example, about 700 °C to about 1000 °C, or about 750 °C to about 950 °C, and may be performed for about 10 hours to about 40 hours, about 12 hours to about 36 hours, or about 20 hours to about 30 hours.

The heat treatment may include (e.g. consist of) a temperature increase step (e.g. from room temperature (e.g. 25 °C) to the heat treatment temperature), a temperature maintaining step (e.g. at the heat treatment temperature), and a temperature decrease step (e.g. from the heat treatment temperature to room temperature (e.g. 25 °C)). The temperature increase rate in the temperature increase step and the temperature decrease rate in the temperature decrease step may be, for example, about 1 °C/min to about 10 °C/min, or about 2 °C/min to about 5 °C/min, respectively, and if these ranges are satisfied, it is advantageous or beneficial to effectively synthesize a positive electrode active material according to the desired Chemical Formula 1.

**Positive Electrode**

In some embodiments, a positive electrode for a rechargeable lithium battery including the aforementioned positive electrode active material is provided. The positive electrode includes a positive electrode current collector and a positive electrode active material layer on the positive electrode current collector, and the positive electrode active material layer may include the aforementioned positive electrode active material. The positive electrode active material layer may further include other types (or kinds) of positive electrode active materials in addition to the aforementioned positive electrode active materials, and may optionally further include a binder, a conductive material (e.g., an electrically conductive material), or a combination thereof.

## Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

## Conductive Material

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum, silver, and the like; a conductive polymer (e.g., an electrically conductive polymer) such as a polyphenylene derivative; or a mixture thereof.

A content of the binder and the conductive material may be about 0.5 wt% to about 5 wt%, respectively, based on 100 wt% of the positive electrode active material layer.

The positive electrode current collector may include Al, but is not limited thereto.

## Rechargeable Lithium Battery

Some embodiments provide a rechargeable lithium battery including the aforementioned positive electrode, negative electrode, and electrolyte. The aforementioned positive electrode active material may be applied not only to lithium ion batteries but also to all-solid-state rechargeable batteries. Accordingly, in some embodiments, a rechargeable lithium battery includes a positive electrode, a negative electrode, a separator between the positive electrode and the negative electrode, and an electrolyte, and in some embodiments, an all-solid-state rechargeable battery includes the positive electrode, negative electrode, and a solid electrolyte layer between the positive electrode and the negative electrode. Hereinafter, for convenience, the configuration of a lithium-ion battery using an electrolyte is explained in more detail.

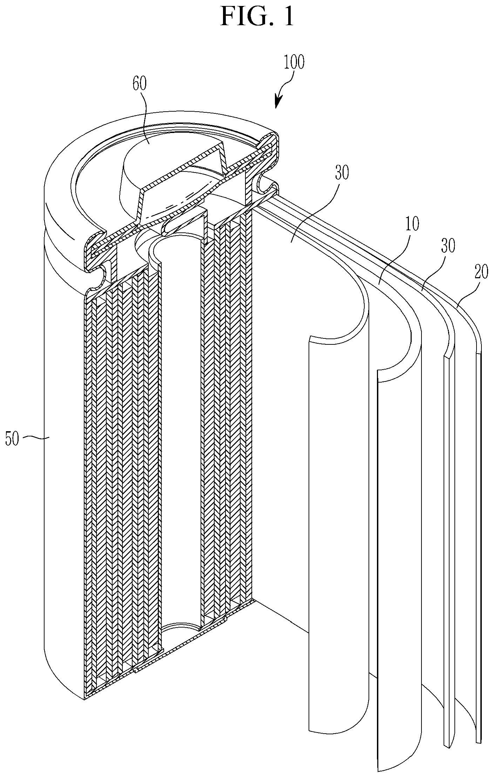

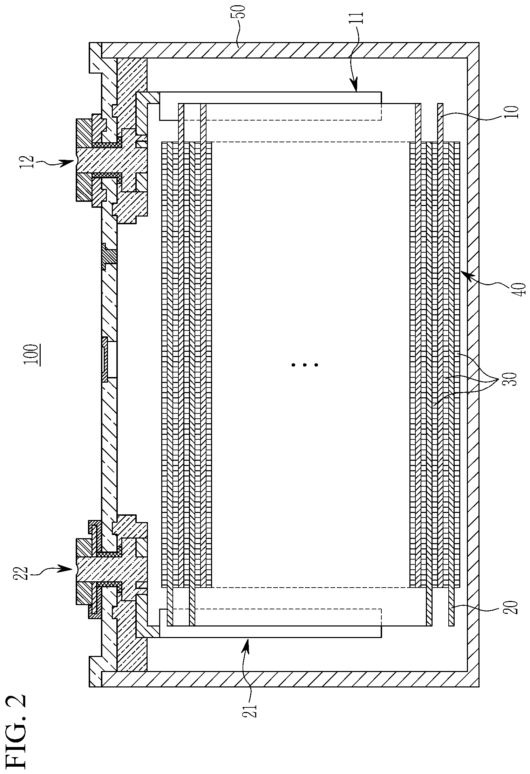

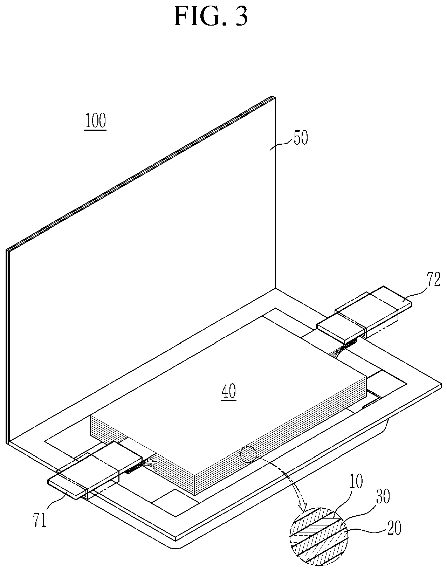

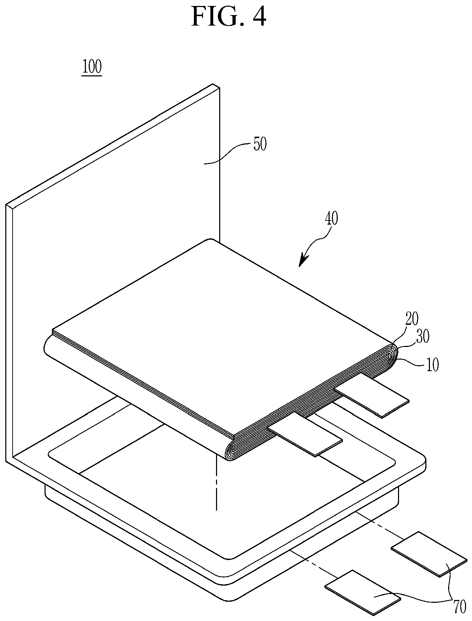

The rechargeable lithium battery may be classified into cylindrical, prismatic, pouch, coin, etc. depending on the shape. FIGS. 1 to 4 are schematic views illustrating a rechargeable lithium battery according to an embodiment. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 sealing the case 50 as shown in FIG. 1. In addition, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70 (FIG. 4), for example, a positive electrode tab 71 and a negative electrode tab 72 (FIG. 3) serving as an electrical path for inducing the current formed in the electrode assembly 40 to the outside.

## Negative Electrode

The negative electrode may include a current collector and a negative electrode active material layer on the current collector, and may further include a negative electrode active material, a binder, a conductive material (e.g., an electrically conductive material), or a combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof)), or a combination thereof. The Sn-based negative electrode active material may be Sn, $SnO_2$, a Sn alloy, or a combination thereof.

The silicon-carbon composite may be a composite of silicon and amorphous carbon. An average particle diameter ($D_{50}$) of the silicon-carbon composite particles may be, for example, about 0.5 μm to about 20 μm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In some embodiments, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter ($D_{50}$) of the silicon particles (primary particles) may be about 10 nm to about 1 μm, or about 10 nm to about 200 nm. The silicon particles may exist as silicon alone, in the form of a silicon alloy, and/or in an oxidized form. The oxidized form of silicon may be represented by $SiO_x$ ($0<x<2$). At this time, the atomic content ratio of Si:O, which indicates a degree of oxidation, may be about 99:1 to about 33:67. As used herein, when a definition is not otherwise provided, an average particle diameter ($D_{50}$) indicates a particle where an accumulated volume is about 50 volume% in a particle distribution.

The Si-based negative electrode active material and/or Sn-based negative electrode active material may be mixed together with the carbon-based negative electrode active material. When the Si-based negative electrode active material and/or Sn-based negative electrode active material and the carbon-based negative electrode active material are mixed together and used, the mixing ratio may be a weight ratio of about 1:99 to about 90:10.

**Binder**

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed together and used. The alkali metal may be Na, K, and/or Li.

The dry binder may be a polymer material capable of becoming fiber (e.g., capable of being fibrillized or fiberized), and may be, for example, polytetrafluoroethylene, polyvinylidene fluoride, a polyvinylidene fluoride-hexafluoropropylene copolymer, polyethylene oxide, or a combination thereof.

## Conductive Material

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum silver, and the like; a conductive polymer (e.g., an electrically conductive polymer) such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

## Current Collector

The negative current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof, and may be in the form of a foil, sheet, and/or foam. A thickness of the negative current collector may be, for example, about 1 $\mu$m to about 20 $\mu$m, about 5 $\mu$m to about 15 $\mu$m, or about 7 $\mu$m to about 10 $\mu$m.

## Electrolyte

For example, the electrolyte for a rechargeable lithium battery may be an electrolyte, which may include a non-aqueous organic solvent and a lithium salt.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and/or the like; amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and when two or more types (or kinds) are used in a mixture, a mixing ratio can be suitable or appropriately adjusted according to suitable or desired battery performance, which should be readily apparent to those working in the field upon reviewing this disclosure.

When using a carbonate-based solvent, a cyclic carbonate and a chain carbonate may be mixed together and used, and the cyclic carbonate and the chain carbonate may be mixed together in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of about 1:1 to about 30:1.

The electrolyte may further include vinyl ethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

A concentration of lithium salt may be within the range of about 0.1 M to about 2.0 M. When the concentration of lithium salt is within the above range, the electrolyte has suitable or appropriate ion conductivity and viscosity, and thus excellent performance can be achieved and lithium ions can move effectively.

**Separator**

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from a polymer polyolefin such as polyethylene and polypropylene, polyester such as polyethylene terephthalate and polybutylene terephthalate, polyacetal, polyamide, polyimide, polycarbonate, polyether ketone, polyaryether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, and/or a copolymer and/or a mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acryl-based copolymer including a first structural unit derived from (meth)acrylamide, and a second structural unit including at least one selected from a structural unit derived from (meth)acrylic acid or (meth)acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described below. However, the following examples are only examples of embodiments of the present disclosure, and the present disclosure is not limited to the following examples.

**Example 1**

**1. Preparation of Positive Electrode Active Material**

**(1) Preparation of Precursor**

A mixed solution of metal raw materials was prepared by dissolving nickel sulfate ($NiSO_4 \cdot 6H_2O$) and manganese sulfate ($MnSO_4 \cdot H_2O$) at a molar ratio of Ni:Mn = 50:50 in distilled water. In order to form a complex compound, aqueous

ammonia ($NH_4OH$) as a complex agent and sodium hydroxide (NaOH) as a precipitant were prepared.

After adding the aqueous ammonia at a concentration of 0.25 M to a reactor, the metal raw material mixed solution and the complex agent were injected thereinto at a rate of 142 ml/min and 34 ml/min, respectively, and a stirring power of 3.0 kW/m$^3$ at 50 °C to initiate a reaction. While NaOH was injected thereinto to maintain pH, the reaction was performed for 30 hours. The reaction was ended, when an average size of the obtained particles reached about 10.5 $\mu$m. The obtained resulting material was washed and dried with hot air at about 150 °C for 24 hours to obtain a nickel-manganese-based composite hydroxide ($Ni_{0.5}Mn_{0.5}(OH)_2$).

**(2) Preparation of Positive Electrode Active Material**

$Ni_{0.5}Mn_{0.5}(OH)_2$ and LiOH were mixed together at a molar ratio of Li/(Ni+Mn) = 1.3 and then, heat-treated by raising a temperature at 5 °C/min under an oxygen atmosphere and maintaining it at 950 °C and cooled to room temperature at 5 °C /min for 24 hours in total to prepare a positive electrode active material of $0.3[Li_{1.13}Ni_{0.44}Mn_{0.44}O_2] + 0.7[0.61 (LiNi_{0.72}Mn_{0.28}O_2)+0.26 (Li_2MnO_3)]$.

**2. Manufacture of Rechargeable Lithium Battery Cell (Half-cells)**

97.7 wt% of the positive electrode active material, 1.2 wt% of a polyvinylidene fluoride binder, and 1.1 wt% of a carbon nanotube conductive material were mixed together to prepare positive electrode active material layer slurry, and the slurry was coated on an aluminum foil current collector and then, dried and compressed to manufacture a positive electrode. Herein, a loading level of the positive electrode active material layer was 10 mg/cm$^2$, and a density of the final rolled positive electrode was about 3.5 g/cc.

A rechargeable lithium battery was manufactured by an existing method using a lithium counter electrode as the negative electrode, a polytetrafluoroethylene separator, and an electrolyte solution including 1 M $LiPF_6$ dissolved in a solvent in which ethylene carbonate, ethylmethyl carbonate, and dimethyl carbonate were mixed together in a volume ratio of 2:4:4, and 1.5 wt% of vinylene carbonate.

**Example 2**

A positive electrode active material and a rechargeable lithium battery cell were manufactured in substantially the same manner as in Example 1 except that a positive electrode active material precursor was prepared by changing the molar ratio of Ni and Mn to 66:34. The positive electrode active material of Example 2 may be expressed as $0.15 [Li_{1.13}Ni_{0.57}Mn_{0.30}O_2] + 0.85[0.61(LiNi_{0.94}Mn_{0.06}O_2)+0.26 (Li_2MnO_3)]$.

**Example 3**

A positive electrode active material and a rechargeable lithium battery cell were manufactured in substantially the same manner as in Example 1 except that the positive electrode active material was prepared by changing the molar ratio of Li/(Ni+Mn) to 1.2. The positive electrode active material of Example 3 may be expressed as $0.41[Li_{1.09}Ni_{0.46}Mn_{0.46}O_2] + 0.59[0.85(LiNi_{0.56}Mn_{0.44}O_2) + 0.10(Li_2MnO_3)]$.

**Example 4**

A positive electrode active material and a rechargeable lithium battery cell were manufactured in substantially the same manner as in Example 1 except that the positive electrode active material was prepared by changing the molar ratio of Li/(Ni+Mn) to 1.1. The positive electrode active material of Example 4 may be expressed as $0.43[Li_{1.05}Ni_{0.48}Mn_{0.48}O_2] + 0.57[0.85(LiNi_{0.56}Mn_{0.44}O_2) + 0.10(Li_2MnO_3)]$.

**Comparative Example 1**

A positive electrode active material and a rechargeable lithium battery cell were manufactured in substantially the same manner as in Example 1 except that a positive electrode active material precursor was prepared by changing the molar ratio of Ni and Mn to 34:66. The positive electrode active material of Comparative Example 1 may be expressed as $0.66(LiNi_{0.50}Mn_{0.50}O_2) + 0.34(Li_2MnO_3)$.

**Comparative Example 2**

A positive electrode active material and a rechargeable lithium battery cell were manufactured in substantially the same manner as in Example 1 except that a positive electrode active material precursor was prepared by changing the molar ratio of Ni and Mn to 40:60. The positive electrode active material of Comparative Example 2 may be expressed as $0.70(LiNi_{0.57}Mn_{0.43}O_2) + 0.30(Li_2MnO_3)$.

**Comparative Example 3**

A positive electrode active material and a rechargeable lithium battery cell were manufactured in substantially the same manner as in Example 1 except that a positive electrode active material precursor was prepared by changing the molar ratio of Ni and Mn to 75:25. The positive electrode active material of Comparative Example 3 may be expressed as $0.75 \cdot LiNiO_2 + 0.25(Li_2MnO_3)$.

**Comparative Example 4**

A positive electrode active material and a rechargeable lithium battery cell were manufactured in substantially the same manner as in Example 1 except that a positive electrode active material precursor was prepared by changing the molar ratio of Ni and Mn to 80:20. The positive electrode active material of Comparative Example 4 may be expressed as $0.80 \cdot LiNiO_2 + 0.20(Li_2MnO_3) + 0.05Li_2O$.

**Example 5**

A positive electrode active material and a rechargeable lithium battery cell were manufactured in substantially the same manner as in Example 2 except that the heat treatment temperature was changed to 700 °C.

**Comparative Example 5**

A positive electrode active material and a rechargeable lithium battery cell were manufactured in substantially the same manner as in Example 2 except that the heat treatment temperature was changed to 500 °C.

In order to facilitate understanding, each design content of the positive electrode active materials of Examples 1 and 2 and Comparative Examples 1 to 4 is simply shown in Table 1, wherein the contents of Examples 1, 3, and 4 are shown in Table 2, while the contents of Examples 2 and 5 and Comparative Example 5 are shown in Table 3.

Table 1

| | | Comp. Ex. 1 | Comp. Ex. 2 | Ex. 1 | Ex. 2 | Comp. Ex. 3 | Comp. Ex. 4 |
|---|---|---|---|---|---|---|---|
| Ni:Mn | | 34:66 | 40:60 | 50:50 | 66:34 | 75:25 | 80:20 |
| Li/Me | | 1.3 | | | | | |
| $I_a/I_b$ | % | 3.2 | 2.7 | 1.83 | 0.97 | 1.69 | 1.87 |
| P/D | g/cc | 2.6 | 2.7 | 2.74 | 2.76 | 2.89 | 2.97 |
| Residual lithium | ppm | 480 | 707 | 738 | 3157 | 4122 | 4972 |
| c/a lattice constant ratio | - | 4.975 | 4.969 | 4.968 | 4.965 | 4.958 | 4.950 |
| "a" lattice constant | Å | 2.867 | 2.874 | 2.875 | 2.865 | 2.866 | 2.868 |
| Charge capacity | mAh/g | 306.9 | 265.8 | 270.0 | 292.7 | 272.9 | 238.6 |
| Discharge capacity | | 222.6 | 196.3 | 194.3 | 184.4 | 178.9 | 188.2 |
| Reversible discharge capacity ratio | % | 72.5 | 73.9 | 72.0 | 63.0 | 65.6 | 78.9 |
| ΔC | mAh/g | 77.4 | 38.5 | 21.8 | 11.8 | 0 | -0.7 |
| $\Delta C/C_{tot}$ | % | 34.8 | 19.6 | 11.2 | 6.4 | 0.0 | -0.4 |
| Average voltage | $V_{(vs.Li/Li+)}$ | 3.713 | 3.801 | 3.865 | 3.83 | 3.844 | 3.852 |
| High-temperature cycle-life | % | 97.6 | 97.8 | 94.8 | 77.1 | 70.9 | 66.5 |
| Voltage drop | mV | 109.0 | 94.7 | 65.5 | 67.0 | 69.0 | 68.4 |

Table 2

|  |  | Ex. 1 | Ex. 3 | Ex. 4 |
|---|---|---|---|---|
| Ni:Mn | | 50:50 | | |
| Li/Me | | 1.3 | 1.2 | 1.1 |
| $I_a/I_b$ | % | 1.83 | 1.37 | 0.97 |
| P/D | g/cc | 2.74 | 2.81 | 2.81 |
| Residual lithium | ppm | 738 | 498 | 400 |
| c/a lattice constant ratio | - | 4.968 | 4.954 | 4.953 |
| "a" lattice constant | Å | 2.875 | 2.880 | 2.882 |
| Charge capacity | mAh/g | 270.0 | 250.8 | 244.5 |
| Discharge capacity | | 194.3 | 193.4 | 193.5 |
| Reversible discharge capacity ratio | % | 72.0 | 77.1 | 79.1 |
| $\Delta C$ | mAh/g | 21.8 | 13.3 | 10.5 |
| $\Delta C/C_{tot}$ | % | 11.2 | 6.9 | 5.4 |
| Average voltage | $V_{(vs.Li/Li+)}$ | 3.865 | 3.887 | 3.889 |
| High-temperature cycle-life | % | 94.8 | 94.8 | 95.4 |
| Voltage drop | mV | 65.5 | 55.4 | 52.4 |

Table 3

|  |  | Ex. 2 | Ex. 5 | Comp. Ex. 5 |
|---|---|---|---|---|
| Ni:Mn | | 66:34 | | |
| Li/Me | | 1.3 | | |
| Heat treatment | °C | 950 | 700 | 500 |
| $I_a/I_b$ | % | 0.97 | 1.30 | 4.64 |

**Evaluation Example 1: XRD and SEM Evaluations**

X-ray diffraction analysis was performed using Bruker's Powder XRD (D8 Advance) equipment under the following conditions.

- X-ray wavelength: 1.5406 Å (CuK$\alpha$1)
- Slit condition: Divergence Slit 0.5 °, Scattering Slit 0.5 °, Receiving Slit 0.20 mm
- Scan condition: Continuous Scan, 10 °≤2θ≤80 °, 0.01 °/step, 1.27 °/min, total measurement time 55 min.

After performing an XRD analysis of the positive electrode active materials of the examples and the comparative examples, a ratio of (020) plane peak intensity ($I_a$) of $Li_2MnO_3$ corresponding to a C2/m space group to (003) phase peak intensity ($I_b$) of $LiNi_zMn_{1-z}O_2$ corresponding to a $R\bar{3}m$ space group was calculated, and the results are shown as $I_a/I_b$ in Tables 1 to 3. In addition, an a lattice constant (Å) and a ratio of a c lattice constant to the lattice constant a as c/a are shown in Tables 1 to 2.

Referring to Tables 1 to 3, the positive electrode active materials of the examples satisfied a $I_a/I_b$ ratio of less than or equal to 2%. Comparative Examples 1 and 2 having a nickel content of less than 50 mol% satisfied a $I_a/I_b$ ratio of greater than 2%. Referring to Table 2, as the molar ratio of lithium to total metal excluding the lithium decreased from 1.3 to 1.1, the $I_a/I_b$ ratio decreased, and a ratio of capacity by O-redox to total capacity also decreased, and as an average discharge voltage increased, the voltage drop tendency was also reduced.

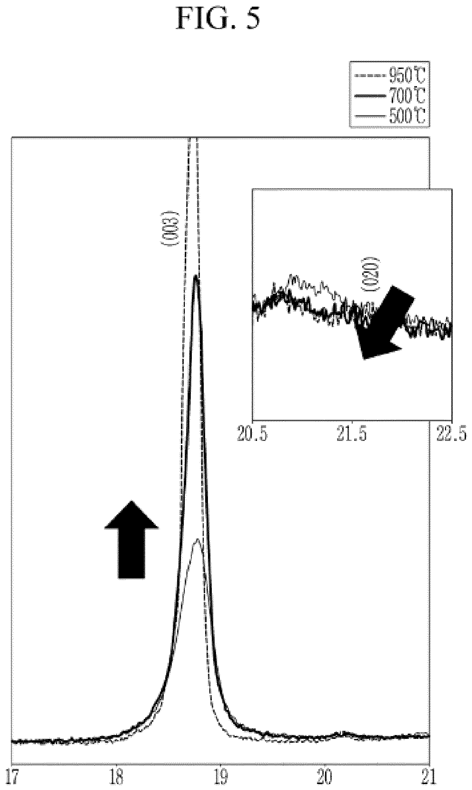

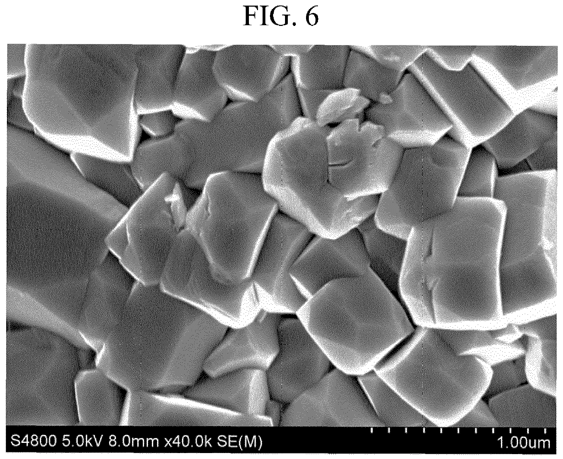

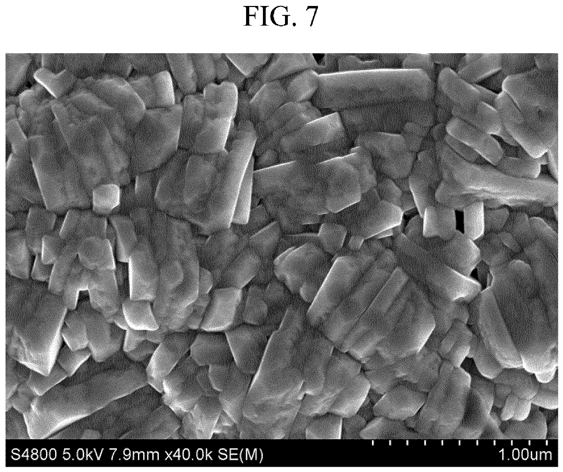

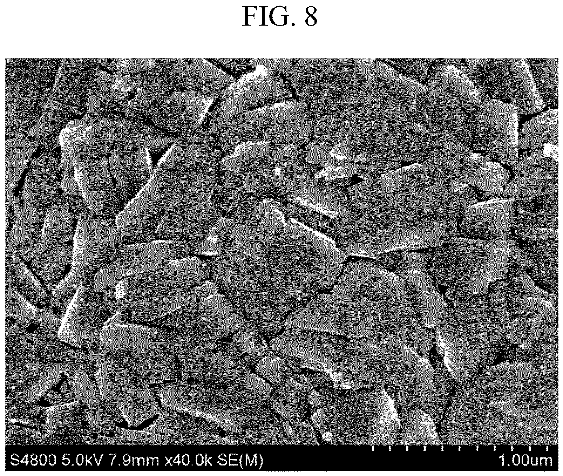

On the other hand, XRD analysis graphs of the positive electrode active materials of Examples 2 and 5 and Comparative Example 5 are shown in FIG. 5. In FIG. 5, a horizontal axis means 2θ(°). Herein, a large graph represents a peak on the (003) plane, and a small graph represents a peak on the (020) plane. Referring to FIG. 5 and Table 3, even if materials having the same composition were applied, as the heat treatment temperature increased during the synthesis, the peak intensity on the (003) plane was stronger, but the peak intensity of the (020) plane became weaker, and thereby, the $I_a/I_b$ ratio was gradually smaller. FIGS. 6 to 8 show SEM images of the particle surfaces of the positive electrode active materials of Examples 2 and 5 and Comparative Example 5 in order. Referring to FIGS. 6 to 8, the particles each had a different shape depending on a heat treatment temperature.

In addition, the examples satisfied an a-axis lattice constant of greater than or equal to 2.865 Å or greater than or equal to 2.875 Å and concurrently (e.g., simultaneously), a ratio of a "c" lattice constant to the "a" lattice constant (c/a) of less than or equal to 4.968. As in the examples, when the a-axis lattice constant was greater than or equal to 2.865 Å and the c/a ratio was less than or equal to 4.968, a ratio of capacity by O-redox to total capacity decreased, an average discharge voltage increased, and the voltage drop tendency decreased.

## Evaluation Example 2: Pellet Density

Each of the positive electrode active materials of Examples 1 to 4 and Comparative Examples 1 to 4 was pressed at a pressure of 3.3 tons into a pellet, of which density was measured, and the results are shown as P/D (pellet density) in Tables 1 and 2. Referring to Tables 1 and 2, the positive electrode active materials of the examples had a pellet density of greater than 2.70 g/cc, which turned out to be higher than those of Comparative Examples 1 and 2 having a high O-redox ratio due to a high manganese content. Referring to Table 2, as the molar ratio of lithium to total metal excluding the lithium decreased from 1.3 to 1.1, the pellet density turned out to increase. Comparative Examples 3 and 4 having a low manganese content exhibited higher pellet density than the examples but had difficulty in realizing high capacity due to an additional capacity ratio by O-redox of less than or equal to 0. Accordingly, the positive electrode active materials of the examples realized additional capacity by O-redox and concurrently (e.g., simultaneously), had a pellet density of greater than of 2.70 g/cc, resulting in realizing much higher electrode density.

Because $LiNiO_2$, $LiMnO_2$, $Li_2MnO_3$, which are basic materials of the positive electrode active material, each have theoretical density of 4.62 g/cc, 4.04 g/cc, and 3.73 g/cc, a lithium-manganese-rich material such as the positive electrode active material of some embodiments tends to have lower theoretical density, as a Mn proportion is higher, but the theoretical density is higher, as a Ni proportion is higher. However, as described above, because O-redox was expressed from $Li_2MnO_3$, the O-redox, which was used to achieve high capacity, conversely lowered the theoretical density, thereby canceling out the effect of increasing capacity. In this respect, the materials of Examples 1 and 2 had a higher Mn and lower Ni proportion than Comparative Examples 1 and 2 having high O-redox proportion and thus exhibited high theoretical density but had a higher Mn proportion than Comparative Examples 3 and 4 and thus exhibited low theoretical density but realized high capacity due to expression of O-redox, wherein a strategy of finding a balance between suitable or appropriate O-redox expression and theoretical density was applied. In addition, as further described below, under the same Ni and Mn ratio, as the Li/Me ratio was lower, because an amount of $Li_2MnO_3$, an O-redox expressing material, was decreased, there was an effect of increasing theoretical density and concurrently (e.g., simultaneously), limiting the O-redox expression, which was consistent with the results of Examples 3 and 4, and accordingly, this strategy is another effective way of finding a balance between O-redox capacity control of and theoretical density improvement.

## Evaluation Example 3: Residual Lithium

The positive electrode active materials of Examples 1 to 4 and Comparative Examples 1 to 4 were measured with respect to a residual lithium content on the surface in an HCl titration method, and the results are shown in Tables 1 and 2. In the tables, the residual lithium content, which was measured by using a unit of ppm, was $10^{-4}$ wt% based on 100 wt% of each positive electrode active material. Specifically, 10 g of the positive electrode active material was added to 100 ml of distilled water and then, stirred for 30 minutes at 300 rpm and then, measured with respect to pH changes, while adding HCl thereto. Herein, because unreacted residual lithium on the positive electrode active material surface exists under the presence of $Li_2CO_3$, LiOH, and the like, $CO_3^{2-}$, OH- ions, etc. are titrated by reacting with $H^+$ of HCl. An amount of the HCl solution added above was used to calculate a content of the residual lithium. Referring to Tables 1 and 2, the positive electrode active materials of the examples had a content of the residual lithium of less than or equal to about 0.4 wt%, or less than or equal to about 0.3 wt% or less than or equal to about 0.1 wt%. On the contrary, Comparative Examples 3 and 4 having a nickel content of greater than 70 mol% had a residual lithium content of greater than 0.4 wt%.

## Evaluation Example 4: O-redox Capacity Evaluation

The half-cells of Examples 1 to 4 and Comparative Examples 1 to 4 were charged and discharged as the aforementioned 1st set, and discharge capacity (X) of the second cycle was provided as "discharge capacity" in Tables 1 and 2. Separately, the half-cells were twice charged and discharged as the second set to measure discharge capacity (Y) at the second cycle. "ΔC," which was obtained by subtracting Y from X, is shown in Tables 1 and 2 and means capacity by O-redox. {(X-Y)/X} x 100 was calculated and then, shown as "$\Delta C/C_{tot}$" in Tables 1 and 2 and means a ratio of O-redox capacity to total capacity. Referring to Tables 1 and 2, the examples had an O-redox proportion of less than 15%. In Table 1, Comparative Examples 1 and 2 exhibited a high O-redox proportion of greater than or equal to 19.6%, and Comparative Examples 3 and 4 exhibited no O-redox expression capacity. Referring to Table 2, as the molar ratio of lithium to total metal excluding the lithium from 1.3 to 1.1, the O-redox proportion decreased much further.

**Evaluation Example 5: Evaluation of Reversible Discharge Capacity Ratio**

In the O-redox capacity evaluation method of Evaluation Example 4, charge capacity at the first cycle of the first set was divided by discharge capacity at the second cycle, and the results are shown as a reversible discharge capacity ratio in Tables 1 and 2. Referring to Table 2, Examples 3 and 4 in which the molar ratio of lithium to total metal excluding the lithium was lowered to less than or equal to 1.2 exhibited an improved reversible discharge capacity ratio of greater than or equal to 77%, which may confirm that they were prepared as a material optimized or improved for achieving high energy density.

**Evaluation Example 6: Evaluation of Average Discharge Voltage**

The half-cells of Examples 1 to 4 and Comparative Examples 1 to 4 were charged and discharged as the first set and measured with respect to an average discharge voltage at the second cycle, and the results are shown as "average voltage" in Tables 1 and 2. The average discharge voltage was obtained by obtaining a discharge voltage curve (a voltage-capacity graph) after charging and discharging the half-cells, integrating an area under the curved line, and dividing the area by the discharge capacity.
Referring to Tables 1 and 2, Comparative Examples 1 and 2 exhibited an average discharge voltage of less than or equal to 3.80 V, but the examples exhibited an improved average discharge voltage of greater than or equal to 3.83 V. Referring to Table 2, as the molar ratio of lithium to total metal excluding the lithium decreased from 1.3 to 1.1, the average discharge voltage increased.

**Evaluation Example 7: Evaluation of Cycle-life characteristic and Voltage Drop Characteristics**

The half-cells of Examples 1 to 4 and Comparative Examples 1 to 4 were charged and discharged as the first set and then, 50 times or more repeatedly charged and discharged at 1.0 C within a voltage range of 3.0 V to 4.45 V at 45 °C to calculate a ratio of 50th cycle discharge capacity to initial discharge capacity, which is shown as "high temperature cycle-life" in Tables 1 and 2. In addition, after subtracting an average discharge voltage at the 50th cycle from an average discharge voltage at the first cycle at 1.0 C, the result is shown as "voltage drop" in Tables 1 and 2.
Referring to Tables 1 and 2, Comparative Examples 3 and 4 exhibited deteriorated cycle-life characteristics, that is, capacity retention of less than or equal to 71% at the 50th cycle, but the examples realized cycle-life characteristics of greater than or equal to 77% or greater than or equal to 94%. In addition, Comparative Examples 1 and 2 exhibited a voltage drop of greater than or equal to 90 mV, but the examples exhibited a lowered voltage drop of less than or equal to 70 mV.
While the subject matter of this disclosure has been described in connection with what is presently considered to be practical example embodiments, it is to be understood that the present disclosure is not limited to the disclosed embodiments. On the contrary, it is intended to cover various modifications and equivalent arrangements included within the scope of the appended claims and equivalents thereof.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

Embodiments are set out in the following clauses:

Clause 1. A positive electrode active material for a rechargeable lithium battery, comprising a compound represented by Chemical Formula 1:

[Chemical Formula 1]  $a[Li_{1+x}(Ni_yMn_{1-y})_{1-x}O_2] + (1-a)[b(LiNi_zMn_{1-z}O_2)+c(Li_2MnO_3)]$

wherein, in Chemical Formula 1, $0<a<1$, $0.03\leq x\leq 0.2$, $0.35\leq y\leq 0.7$, $0<b<1$, $0<c<1$, and $0.5\leq z\leq 1.0$.

Clause 2. The positive electrode active material of clause 1, wherein: the positive electrode active material comprises both:

a solid-solution phase represented by $[Li_{1+x}(Ni_yMn_{1-y})_{1-x}O_2]$, and
a composite phase represented by $[b(LiNi_zMn_{1-z}O_2)+c(Li_2MnO_3)]$.

Clause 3. The positive electrode active material of clause 1 or clause 2, wherein:
in Chemical Formula 1, $0.5\leq y\leq 0.66$, $0.5\leq z\leq 0.95$.

Clause 4. The positive electrode active material of any one of clauses 1 to 3, wherein:
in Chemical Formula 1, $0.03\leq x\leq 0.15$.

Clause 5. The positive electrode active material of any one of clauses 1 to 4, wherein:
in Chemical Formula 1, $0.1\leq a\leq 0.9$, $0.1\leq b\leq 0.9$, and $0.1\leq c\leq 0.9$.

Clause 6. The positive electrode active material of any one of clauses 1 to 5, wherein:
a capacity due to oxygen oxidation-reduction is expressed in $Li_{1+x}(Ni_yMn_{1-y})_{1-x}O_2$ and/or $Li_2MnO_3$.

Clause 7. The positive electrode active material of any one of clauses 1 to 6, wherein:
a ratio of a capacity expressed by oxidation-reduction of oxygen to 100% of a total capacity of the positive electrode active material is less than about 15%.

Clause 8. The positive electrode active material of clause 7, wherein:
a ratio of a capacity expressed by oxidation-reduction of oxygen to 100% of a total capacity of the positive electrode active material is calculated using Equation 1:

## Equation 1

$$\{(X-Y)/X\} \times 100$$

wherein, in Equation 1, X is a discharge capacity in a second cycle of a first set, Y is a discharge capacity in a second cycle of a second set, wherein the first set and the second set refer to manufacturing a half cell using a positive electrode to which the above positive electrode active material is applied and charging and discharging under the following conditions, and the second set is performed immediately after the first set,

first set

(1) first cycle: Charge to an upper limit voltage of 4.55 V to 4.8V at a constant current of 0.1 C at 25 °C, then maintain the voltage until the current value reaches 0.05 C, and then discharge to 2.5 V at a constant current of 0.1 C, and
(2) second cycle: Charge to 4.45 V at a constant current of 0.2 C at 25 °C, then maintain the voltage until the current value reaches 0.05 C, and then discharge to 2.5 V at a constant current of 0.2 C,

**second set**

(1) first cycle: Charge to 4.45 V at a constant current of 0.2 C at 25 °C, then maintain the voltage until the current value reaches 0.05 C, and then discharge to 2.5 V at a constant current of 0.2 C, and
(2) second cycle: Charge to 4.45 V at a constant current of 0.2 C at 25 °C, then maintain the voltage until the current value reaches 0.05 C, and then discharge to 2.5 V at a constant current of 0.2 C.

Clause 9. The positive electrode active material of clause 8, wherein:
an upper limit voltage of the first cycle of the first set is 4.65 V.

Clause 10. The positive electrode active material of any one of clauses 1 to 9, wherein:
the positive electrode active material has an average discharge voltage of greater than or equal to about 3.83 V (vs. Li/Li$^+$).

Clause 11. The positive electrode active material of any one of clauses 1 to 10, wherein:
a ratio of a peak intensity of a (020) plane of a C2/m space group to a peak intensity of the (003) plane of a R$\overline{3}$m space group in an X-ray diffraction analysis of the positive electrode active material is less than or equal to about 2%.

Clause 12. The positive electrode active material of any one of clauses 1 to 11, wherein:
a reversible discharge capacity ratio calculated by Equation 2 is greater than or equal to about 72%:

$$\text{Equation 2}$$

$$(X/A) \times 100$$

wherein, in Equation 2, A is a charge capacity of a first cycle of a first set, X is a discharge capacity of a second cycle of the first set, and the first set refers to manufacturing a half cell using a positive electrode to which the positive electrode active material is applied and charging and discharging under the following conditions,
**first set**

(1) first cycle: Charge to an upper limit voltage of 4.55 V to 4.8V at a constant current of 0.1 C at 25 °C, then maintain the voltage until the current value reaches 0.05 C, and then discharge to 2.5 V at a constant current of 0.1 C, and
(2) second cycle: Charge to 4.45 V at a constant current of 0.2 C at 25 °C, then maintain the voltage until the current value reaches 0.05 C, and then discharge to 2.5 V at a constant current of 0.2 C.

Clause 13. The positive electrode active material of clause 12, wherein:
an upper limit voltage of the first cycle of the first set is 4.65 V.

Clause 14. The positive electrode active material of clause 12 or clause 13, wherein:
the reversible discharge capacity ratio is greater than or equal to about 77%.

Clause 15. The positive electrode active material of any one of clauses 1 to 14, wherein:
a pellet density of the positive electrode active material is greater than about 2.70 g/cc.

Clause 16. The positive electrode active material of any one of clauses 1 to 15, wherein:
a pellet density of the positive electrode active material is about 2.71 g/cc to about 2.85 g/cc.

Clause 17. The positive electrode active material of any one of clauses 1 to 16, wherein:
a residual lithium content on the surface of the positive electrode active material is less than or equal to about 0.4 wt%.

Clause 18. The positive electrode active material of any one of clauses 1 to 17, wherein:
a residual lithium content on the surface of the positive electrode active material is less than or equal to about 0.1 wt%.

Clause 19. The positive electrode active material of any one of clauses 1 to 18, wherein:
an a lattice constant in an X-ray diffraction analysis of the positive electrode active material is greater than or equal to about 2.865 Å.

Clause 20. The positive electrode active material of any one of clauses 1 to 19, wherein:
an a lattice constant in X-ray diffraction analysis of the positive electrode active material is greater than or equal to about 2.875 Å.

Clause 21. The positive electrode active material of any one of clauses 1 to 20, wherein:
a ratio of a c lattice constant to an a lattice constant is less than or equal to about 4.968 in an X-ray diffraction analysis of the positive electrode active material.

Clause 22. A method of preparing a positive electrode active material, comprising:

mixing together a precursor represented by Chemical Formula 2 and a lithium raw material and performing a heat treatment,
wherein a molar ratio of lithium of the lithium raw material to a total metal of the precursor satisfies about 1.06 to about 1.5:

$$\text{Chemical Formula 2} \qquad Ni_{y2}Mn_{1-y2}(OH)_2$$

wherein, in Chemical Formula 2, $0.5 \leq y2 \leq 0.7$.

Clause 23. The method of clause 22, wherein:
the heat treatment is performed for about 10 hours to about 40 hours in a temperature range of about 700 °C to about 1100 °C.

Clause 24. The method of clause 22 or clause 23, wherein:

the heat treatment comprises a temperature increase step, a temperature maintaining step, and a temperature decrease step, and
a temperature increase rate in the temperature increase step and a temperature decrease rate in the temperature decrease step are respectively about 1 °C/min to about 10 °C/min.

Clause 25. A positive electrode for a rechargeable lithium battery, comprising:
the positive electrode active material of any one of clauses 1 to 21.

Clause 26. A rechargeable lithium battery, comprising:

the positive electrode of clause 25,
a negative electrode,
a separator between the positive electrode and the negative electrode, and
an electrolyte.

Clause 27. An all-solid-state rechargeable battery, comprising:

the positive electrode of clause 25,
a negative electrode, and

a solid electrolyte layer between the positive electrode and the negative electrode.

**Claims**

1.  A positive electrode active material for a rechargeable lithium battery, comprising a compound represented by Chemical Formula 1:

    $$[\text{Chemical Formula 1}] \qquad a[Li_{1+x}(Ni_yMn_{1-y})_{1-x}O_2] + (1-a)[b(LiNi_zMn_{1-z}O_2)+c(Li_2MnO_3)]$$

    wherein, in Chemical Formula 1, $0<a<1$, $0.03 \leq x \leq 0.2$, $0.35 \leq y \leq 0.7$, $0<b<1$, $0<c<1$, and $0.5 \leq z \leq 1.0$.

2.  The positive electrode active material as claimed in claim 1, wherein:
    the positive electrode active material comprises both:

    a solid-solution phase represented by $[Li_{1+x}(Ni_yMn_{1-y})_{1-x}O_2]$, and
    a composite phase represented by $[b(LiNi_zMn_{1-z}O_2)+c(Li_2MnO_3)]$.

3.  The positive electrode active material as claimed in claim 1 or claim 2, wherein:
    in Chemical Formula 1, $0.5 \leq y \leq 0.66$, $0.5 \leq z \leq 0.95$.

4.  The positive electrode active material as claimed in any one of claims 1 to 3, wherein:

(i) in Chemical Formula 1, $0.05 \leq x \leq 0.15$; and/or
(ii) in Chemical Formula 1, $0.1 \leq a \leq 0.9$, $0.1 \leq b \leq 0.9$, and $0.1 \leq c \leq 0.9$.

5. The positive electrode active material as claimed in any one of claims 1 to 4, wherein:
   a capacity due to oxygen oxidation-reduction is expressed in $Li_{1+x}(Ni_yMn_{1-y})_{1-x}O_2$ and/or $Li_2MnO_3$.

6. The positive electrode active material as claimed in any one of claims 1 to 5, wherein:
   a ratio of a capacity expressed by oxidation-reduction of oxygen to 100% of a total capacity of the positive electrode active material is less than about 15%.

7. The positive electrode active material as claimed in claim 6, wherein:

   a ratio of a capacity expressed by oxidation-reduction of oxygen to 100% of a total capacity of the positive electrode active material is calculated using Equation 1:

   Equation 1

   $$\{(X-Y)/X\} \times 100$$

   wherein, in Equation 1, X is a discharge capacity in a second cycle of a first set, Y is a discharge capacity in a second cycle of a second set, wherein the first set and the second set refer to manufacturing a half cell using a positive electrode to which the above positive electrode active material is applied and charging and discharging under the following conditions, and the second set is performed immediately after the first set,
   **first set**

   (1) first cycle: Charge to 4.65 V at a constant current of 0.1 C at 25 °C, then maintain the voltage until the current value reaches 0.05 C, and then discharge to 2.5 V at a constant current of 0.1 C, and
   (2) second cycle: Charge to 4.45 V at a constant current of 0.2 C at 25 °C, then maintain the voltage until the current value reaches 0.05 C, and then discharge to 2.5 V at a constant current of 0.2 C,

   **second set**

   (1) first cycle: Charge to 4.45 V at a constant current of 0.2 C at 25 °C, then maintain the voltage until the current value reaches 0.05 C, and then discharge to 2.5 V at a constant current of 0.2 C, and
   (2) second cycle: Charge to 4.45 V at a constant current of 0.2 C at 25 °C, then maintain the voltage until the current value reaches 0.05 C, and then discharge to 2.5 V at a constant current of 0.2 C;

   optionally wherein:
   an upper limit voltage of the first cycle of the first set is greater than or equal to about 4.55 V and less than or equal to about 4.8 V.

8. The positive electrode active material as claimed in any one of claims 1 to 7, wherein:

   (i) the positive electrode active material has an average discharge voltage of greater than or equal to about 3.83 V (vs. $Li/Li^+$); and/or
   (ii) a ratio of a peak intensity of a (020) plane of a C2/m space group to a peak intensity of the (003) plane of a $R\bar{3}m$ space group in an X-ray diffraction analysis of the positive electrode active material is less than or equal to about 2%.

9. The positive electrode active material as claimed in any one of claims 1 to 8, wherein:

   a reversible discharge capacity ratio calculated by Equation 2 is greater than or equal to about 72%:

   Equation 2

   $$(X/A) \times 100$$

wherein, in Equation 2, A is a charge capacity of a first cycle of a first set, X is a discharge capacity of a second cycle of the first set, and the first set refers to manufacturing a half cell using a positive electrode to which the positive electrode active material is applied and charging and discharging under the following conditions,
**first set**

(1) first cycle: Charge to 4.65 V at a constant current of 0.1 C at 25 °C, then maintain the voltage until the current value reaches 0.05 C, and then discharge to 2.5 V at a constant current of 0.1 C, and
(2) second cycle: Charge to 4.45 V at a constant current of 0.2 C at 25 °C, then maintain the voltage until the current value reaches 0.05 C, and then discharge to 2.5 V at a constant current of 0.2 C; optionally wherein:

(i) an upper limit voltage of the first cycle of the first set is greater than or equal to about 4.55 V and less than or equal to about 4.8 V; and/or
(ii) the reversible discharge capacity ratio is greater than or equal to about 77%.

10. The positive electrode active material as claimed in any one of claims 1 to 9, wherein:

(i) a pellet density of the positive electrode active material is greater than about 2.70 g/cc; and/or
(ii) a pellet density of the positive electrode active material is about 2.71 g/cc to about 2.85 g/cc; and/or
(iii) a residual lithium content on the surface of the positive electrode active material is less than or equal to about 0.3 wt%; and/or
(iv) a residual lithium content on the surface of the positive electrode active material is less than or equal to about 0.1 wt%; and/or
(v) an "a" lattice constant in an X-ray diffraction analysis of the positive electrode active material is greater than or equal to about 2.865 Å; and/or
(vi) an "a" lattice constant in X-ray diffraction analysis of the positive electrode active material is greater than or equal to about 2.875 Å; and/or
(vii) a ratio of a "c" lattice constant to an a lattice constant is less than or equal to about 4.968 in an X-ray diffraction analysis of the positive electrode active material.

11. A method of preparing a positive electrode active material, comprising:

mixing together a precursor represented by Chemical Formula 2 and a lithium raw material and performing a heat treatment,
wherein a molar ratio of lithium of the lithium raw material to a total metal of the precursor satisfies about 1.06 to about 1.5:

$$\text{Chemical Formula 2} \qquad Ni_{y2}Mn_{1-y2}(OH)_2$$

wherein, in Chemical Formula 2, $0.5 \le y2 \le 0.7$.

12. The method as claimed in claim 11, wherein:

(i) the heat treatment is performed for about 10 hours to about 40 hours in a temperature range of about 700 °C to about 1100 °C; and/or
(ii) the heat treatment comprises a temperature increase step, a temperature maintaining step, and a temperature decrease step, and

a temperature increase rate in the temperature increase step and a temperature decrease rate in the temperature decrease step are respectively about 1 °C/min to about 10 °C/min.

13. A positive electrode for a rechargeable lithium battery, comprising:
the positive electrode active material as claimed in any one of claims 1 to 10.

14. A rechargeable lithium battery, comprising:

the positive electrode as claimed in claim 13,
a negative electrode,
a separator between the positive electrode and the negative electrode, and

an electrolyte.

15. An all-solid-state rechargeable battery, comprising:

the positive electrode as claimed in claim 13,
a negative electrode, and
a solid electrolyte layer between the positive electrode and the negative electrode.

# FIG. 1

FIG. 2

100

50

11

12

22

21

10

40

30

20

. . .

# FIG. 3

# FIG. 4

# FIG. 5

FIG. 6

S4800 5.0kV 8.0mm x40.0k SE(M)   1.00um

FIG. 7

S4800 5.0kV 7.9mm x40.0k SE(M)                    1.00um

FIG. 8

S4800 5.0kV 7.9mm x40.0k SE(M)          1.00um

Europäisches
Patentamt

European
Patent Office

Office européen
des brevets

# EUROPEAN SEARCH REPORT

**Application Number**

EP 24 20 2274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 104 779 385 A (HARBIN INST OF TECH WEIHAI) 15 July 2015 (2015-07-15) <br> * examples 1-2 * | 1-15 | INV. <br> C01G53/50 <br> C01G53/56 |
| Y | CN 102 664 255 A (CHERY AUTOMOBILE CO LTD) 12 September 2012 (2012-09-12) <br> * examples 1-8 * | 1-15 | |
| Y | PARK ET AL: "Lithium-manganese-nickel-oxide electrodes with integrated layered-spinel structures for lithium batteries", ELECTROCHEMISTRY COMMUNICATIONS, ELSEVIER AMSTERDAM, NL, vol. 9, no. 2, 7 February 2007 (2007-02-07), pages 262-268, XP005878764, ISSN: 1388-2481, DOI: 10.1016/J.ELECOM.2006.09.014 <br> * the whole document * | 1-15 | |
| Y | CN 103 715 410 A (CITIC GUO AN MGL POWER SCIENCE & TECHNOLOGY CO LTD) 9 April 2014 (2014-04-09) <br> * examples 1-6 * | 1-15 | **TECHNICAL FIELDS SEARCHED** (IPC) <br><br> C01G |

The present search report has been drawn up for all claims

| Place of search | Date of completion of the search | Examiner |
|---|---|---|
| Munich | 10 February 2025 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2274

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | Publication date |
|---|---|---|---|---|
| CN 104779385 | A | 15-07-2015 | NONE | |
| CN 102664255 | A | 12-09-2012 | NONE | |
| CN 103715410 | A | 09-04-2014 | NONE | |

EPO FORM P0459